# EUROPEAN PATENT APPLICATION

(11) **EP 4 663 525 A1**
(43) Date of publication of application: **17.12.2025**
(21) Application number: 24767012.8
(22) Date of filing: 29.02.2024
(51) Int. Cl.: B62J 23/00, B62J 45/41, B62M 7/02, F01N 13/00, F02D 35/00

(54) **SADDLE-TYPE VEHICLE AND COVER MEMBER**

(30) Priority: 06.03.2023 JP 2023033863
(71) Applicant: HONDA MOTOR CO., LTD., Tokyo 105-8404 (JP)
(72) Inventor: KANDA, Suguru, Tokyo 107-8556 (JP); KOBAYASHI, Kenta, Tokyo 107-8556 (JP); KANAZAWA, Izumi, Tokyo 107-8556 (JP)
(74) Representative: Kiwit, Benedikt
(86) International application number: PCT/JP2024/007534
(87) International publication number: WO 2024/185642

(57) **Abstract**

A straddle type vehicle comprising an exhaust passage through which exhaust gas of an internal combustion engine flows, an exhaust gas sensor detecting a component of the exhaust gas flowing through the exhaust passage, and a cover member covering the exhaust gas sensor, wherein the cover member has a front wall portion that is disposed on a front side of the exhaust gas sensor in a front-and-rear direction of the straddle type vehicle, and a passing portion through which a traveling wind passes is formed in the front wall portion.

## Description

### TECHNICAL FIELD

The present invention relates to a straddle type vehicle and a cover member.

### BACKGROUND ART

The control of an air-fuel ratio in an internal combustion engine contributes to reducing an influence of exhaust gas on an environment and improving fuel efficiency. A straddle type vehicle includes an exhaust gas sensor for detecting a component of gas exhausted from an internal combustion engine in order to control an air-fuel ratio. Such an exhaust gas sensor needs to be protected from a flying stone or the like during traveling. For example, Patent Literature 1 discloses a protection structure for protecting an exhaust gas sensor from a flying stone or the like during traveling.

### CITATION LIST

### PATENT LITERATURE

PTL1: Japanese Patent Laid-Open No. 2015-068292

### SUMMARY OF INVENTION

### TECHNICAL PROBLEM

However, when the protection structure is provided in the exhaust gas sensor, a traveling wind may hit the protection structure to cause air resistance in the vehicle. The air resistance may deteriorate traveling performance of the straddle type vehicle.

An object of the present invention is to protect an exhaust gas sensor from a flying stone or the like while suppressing air resistance due to a traveling wind.

### SOLUTION TO PROBLEM

According to the present invention, there is provided a straddle type vehicle (100) comprising
an exhaust passage (1) through which exhaust gas of an internal combustion engine (106) flows,
an exhaust gas sensor (2) detecting a component of the exhaust gas flowing through the exhaust passage (1), and
a cover member (3) covering the exhaust gas sensor (2), wherein
the cover member (3) has a front wall portion (4) that is disposed on a front side of the exhaust gas sensor (2) in a front-and-rear direction of the straddle type vehicle (100), and
a passing portion (40) through which a traveling wind passes is formed in the front wall portion (4).

### ADVANTAGEOUS EFFECTS OF INVENTION

According to the present invention,
it is possible to protect an exhaust gas sensor from a flying stone or the like while suppressing air resistance due to a traveling wind.

### BRIEF DESCRIPTION OF DRAWINGS

FIG. 1 is a right side view of a straddle type vehicle according to an embodiment of the present invention.
FIG. 2 is a partially enlarged view of FIG. 1.
FIG. 3A is a perspective view of a cover member.
FIG. 3B is a perspective view of the cover member.
FIG. 4A is a cross-sectional view taken along line A-A of FIG. 3B.
FIG. 4B is a cross-sectional view taken along line B-B of FIG. 3B.
FIG. 5 is a diagram illustrating the periphery of an exhaust gas sensor as viewed in a D4 direction of FIG. 2.
FIG. 6A is a diagram illustrating another arrangement example of the exhaust gas sensor.
FIG. 6B is a diagram illustrating another arrangement example of the exhaust gas sensor.
FIG. 7A is a diagram illustrating another configuration example of a front wall portion.
FIG. 7B is a diagram illustrating another configuration example of the front wall portion.
FIG. 8A is a diagram illustrating a configuration example of a passing portion.
FIG. 8B is a diagram illustrating a configuration example of the passing portion.
FIG. 8C is a diagram illustrating a configuration example of the passing portion.
FIG. 8D is a diagram illustrating a configuration example of the passing portion.
FIG. 8E is a diagram illustrating a configuration example of the passing portion.
FIG. 9A is a diagram illustrating a configuration example of the passing portion.
FIG. 9B is a diagram illustrating a configuration example of the passing portion.
FIG. 9C is a diagram illustrating a configuration example of the passing portion.

### DESCRIPTION OF EMBODIMENTS

An embodiment will be described below in detail with reference to the accompanying drawings. The following embodiment does not limit the invention according to the claims, and all combinations of features described in the embodiment are not necessarily essential to the invention. Two or more features of a plurality of features described in the embodiment may be optionally combined. In addition, the same reference numerals are given to the same or similar configurations, and redundant description will be omitted.

### <First Embodiment>

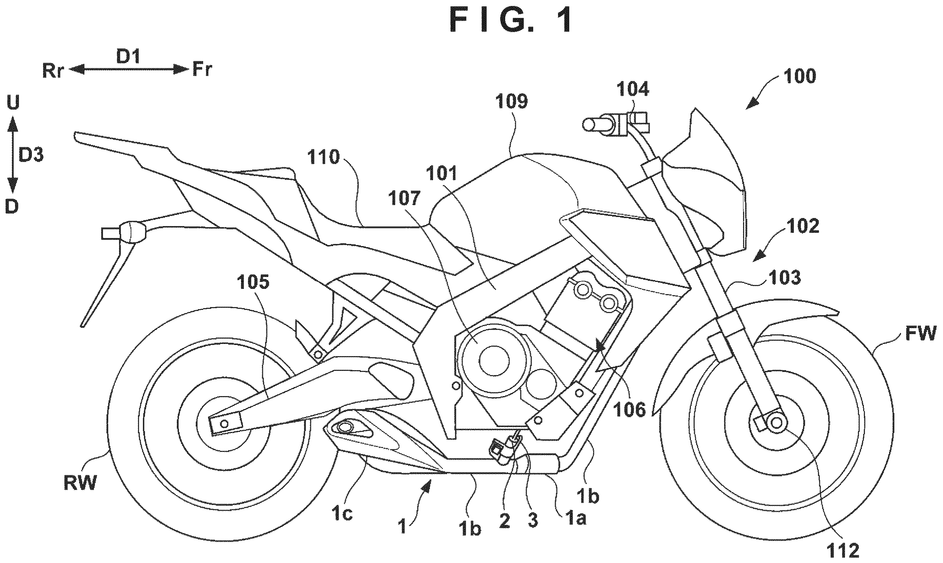

FIG. 1 is a schematic view illustrating an outline of a straddle type vehicle (hereinafter, simply referred to as a vehicle) 100 according to an embodiment of the present invention, and FIG. 1 is a side view (right side view). The vehicle 100 is a motorcycle including a front wheel FW and a rear wheel RW. The present invention is also applicable to a straddle type vehicle other than the type illustrated in FIG. 1. In each drawing, an arrow D1 indicates a front-and-rear direction of the vehicle 100, and Fr and Rr indicate the front and the rear, respectively. An arrow D2 indicates a vehicle width direction, and R and L indicate the right and the left, respectively. An arrow D3 indicates an up-and-down direction of the vehicle 100, and U and D indicate the up and the down, respectively.

The vehicle 100 includes a vehicle body frame 101, which forms its frame. A front wheel steering portion 102 is supported at a front end of the vehicle body frame 101, and a swing arm 105 is swingably supported at a rear end. The front wheel steering portion 102 includes a pair of left and right front forks 103 supporting the front wheel FW via an axle 112, and a steering handlebar 104 attached to upper portions of the front forks 103 via a top bridge (not illustrated). A front fender 111 is provided between the pair of front forks 103.

A front end of the swing arm 105 is swingably supported by the vehicle body frame 101, and the rear wheel RW is supported at its rear end. An internal combustion engine 106 and a transmission 107 are supported by the vehicle body frame 101 in a region between the front wheel FW and the rear wheel RW. The internal combustion engine 106 is, for example, a water-cooled single-cylinder 4-cycle engine. Output of the internal combustion engine 106 is transmitted to the rear wheel RW through the transmission 107 and a chain transmission mechanism (not illustrated). A fuel tank 109 is disposed above the internal combustion engine 106, and a seat 110 on which a rider is seated is disposed on a rear side of the fuel tank 109.

An exhaust device of the internal combustion engine 106 includes an exhaust passage 1 through which exhaust gas of the internal combustion engine 106 flows. The exhaust passage 1 includes an exhaust pipe 1b connected to an exhaust port of the internal combustion engine 106, a catalyst 1a, and a silencer 1c. The catalyst 1a is disposed in a middle portion of the exhaust pipe 1b, and the silencer 1c is disposed at an end portion of the exhaust pipe 1b. The exhaust pipe 1b is provided with an exhaust gas sensor 2. The exhaust gas sensor 2 detects a component of the exhaust gas flowing through the exhaust pipe 1b. A detection result is reflected in the control of the internal combustion engine 106. The exhaust gas sensor 2 is, for example, an oxygen sensor that detects oxygen or an air-fuel ratio sensor (LAF sensor) that detects an air-fuel ratio.

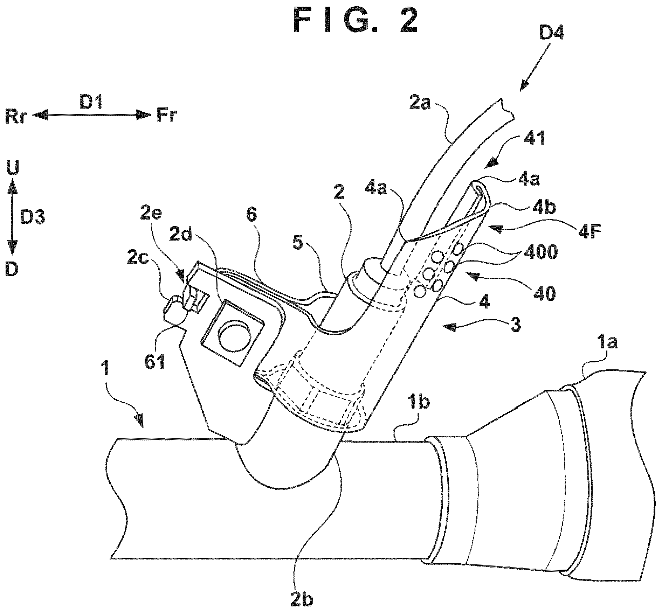

A cover member 3 is provided adjacent to the exhaust gas sensor 2. The cover member 3 is a protective member that covers the exhaust gas sensor 2, and prevents a small stone or the like shot up by the front wheel FW from colliding with the exhaust gas sensor 2 while the vehicle 100 is traveling. Reference is made to FIG. 2 in addition to FIG. 1. FIG. 2 is an enlarged view of the periphery of the exhaust gas sensor 2 of FIG. 1.

The exhaust pipe 1b is provided with a boss portion 2b to which the exhaust gas sensor 2 is attached. The exhaust gas sensor 2 has an axial outer shape extending in a D4 direction inclined from a D3 direction. The D4 direction can also be referred to as a longitudinal direction or an axial direction of the exhaust gas sensor 2. The boss portion 2b has an insertion hole in the D4 direction into which a distal end (detection portion) of the exhaust gas sensor 2 is inserted, and a screw portion for fixing the exhaust gas sensor 2. The exhaust gas sensor 2 is connected to a harness 2a that transmits a signal indicating a detection result of the exhaust gas sensor 2 to a control unit (not illustrated) of the vehicle 100. The D4 direction is also a connection direction between the harness 2a and the exhaust gas sensor 2.

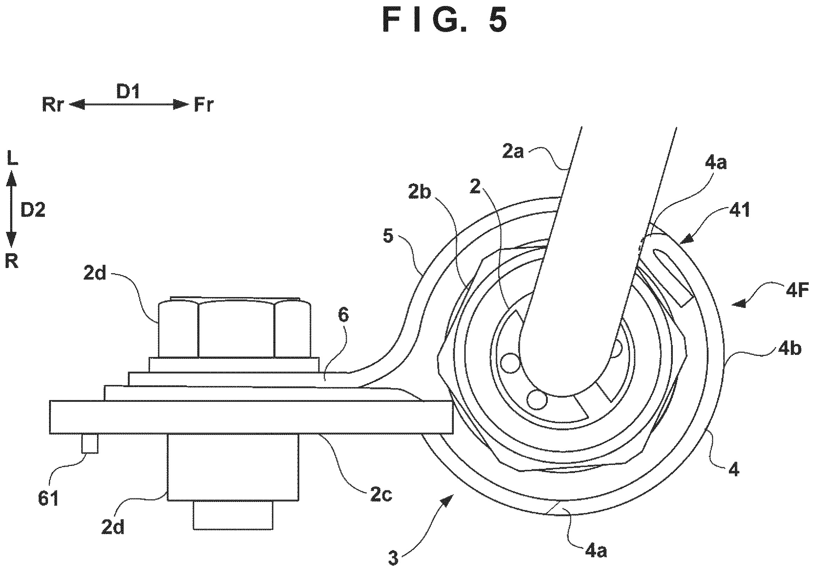

A bracket 2c is integrally provided on the boss portion 2b. The bracket 2c holds the cover member 3. Reference is also made to FIG. 5. FIG. 5 is a diagram illustrating the exhaust gas sensor 2 as viewed in the D4 direction in FIG. 2. In the case of the present embodiment, the cover member 3 is fixed to the bracket 2c by a fixture 2d. The fixing portion 2d is a bolt and a nut. The fixture 2d may be a rivet.

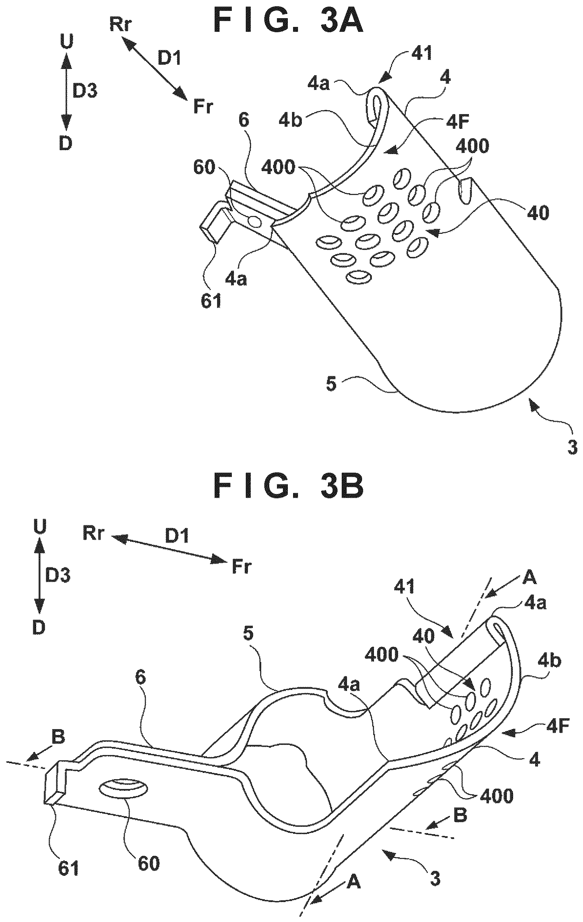

A structure of the cover member 3 will be described with reference to FIGS. 3A and 3B. FIGS. 3A and 3B are perspective views of the cover member 3. The cover member 3 integrally includes a front wall portion 4, an annular portion 5, and an attachment portion 6. The front wall portion 4 is formed so as to extend upward from the annular portion 5, and the attachment portion 6 is formed so as to extend laterally from the annular portion 5. The cover member 3 is manufactured by, for example, processing a metal plate.

The front wall portion 4 is disposed on the front side of the exhaust gas sensor 2 in the D1 direction. The front wall portion 4 covers the front side of the exhaust gas sensor 2, and the front wall portion 4 blocks a small stone or the like that flies in from the front in the D1 direction toward the exhaust gas sensor 2 and thereby prevents the small stone or the like from colliding with the exhaust gas sensor 2.

The front wall portion 4 is a wall body intersecting the D1 direction, and may be a factor that generates air resistance by receiving a traveling wind when the vehicle 100 travels. A passing portion 40 through which the traveling wind passes is formed in the front wall portion 4, and the air resistance due to the traveling wind can be reduced. Therefore, the cover member 3 can protect the exhaust gas sensor 2 from a flying stone or the like during traveling while suppressing the air resistance due to the traveling wind.

In the present embodiment, the passing portion 40 includes a plurality of circular through holes 400 penetrating the front wall portion 4. With the passing portion 40 as the through holes 400, the passing portion 40 can be configured with a relatively simple structure. In addition, a size of the through hole 400 can be appropriately designed. According to the design of the size of the through hole 400, the cover member 3 can adjust a balance between performance of preventing the small stone or the like from colliding with the exhaust gas sensor 2 and performance of reducing the air resistance due to the traveling wind.

The passing portion 40 of the present embodiment is configured in a mesh shape by the plurality of through holes 400. The meshes may be regular or irregular. In the case of the present embodiment, the plurality of through holes 400 are regularly arranged. By configuring the passing portion 40 with the plurality of through holes 400, it is possible to disperse a portion through which the traveling wind passes. In addition, a size of each through hole 400 can be designed to be small. That is, the performance of blocking the small stone entering the passing portion 40 can be enhanced. Since the passing portion 40 is configured in a mesh shape by the plurality of through holes 400, it is possible to secure constant rigidity while increasing an area of the passing portion 40, and it is possible to achieve both the effect of suppressing the air resistance due to the traveling wind and the protection performance of the exhaust gas sensor 2. Further, by forming the passing portion 40 with the mesh-shaped through holes 400, the weight of the front wall portion 4 can be reduced.

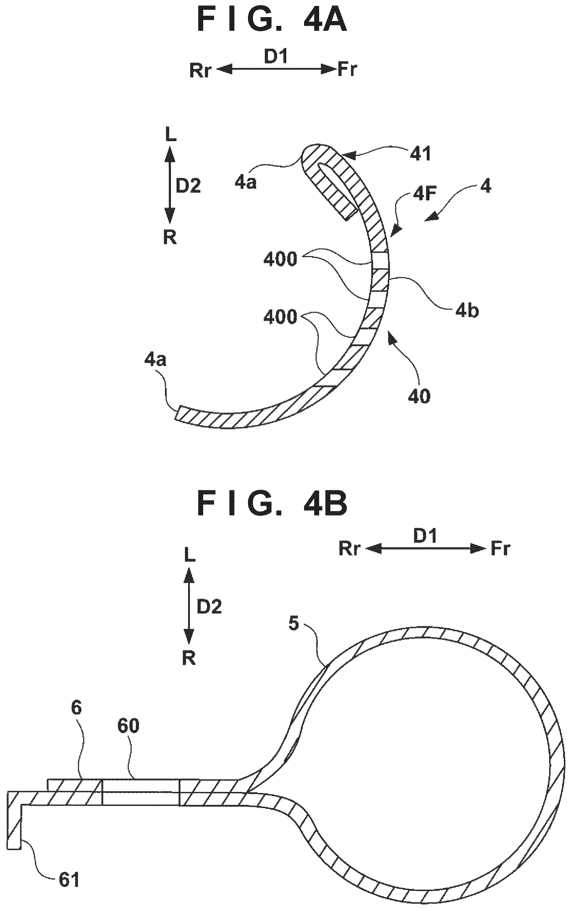

The structure of the front wall portion 4 will be further described. FIG. 4A is a cross-sectional view taken along line A-A of FIG. 3B. The front wall portion 4 includes a left end portion 4a in the D2 direction, a right end portion 4a, and a central portion 4b between both the end portions 4a. The central portion 4b is located forward of both the end portions 4a in the D1 direction, and forms a top portion in a plan view (D4 direction view) of the front wall portion 4 illustrated in FIG. 4A. Since the central portion 4b is located at the foremost position of the front wall portion 4 in the D1 direction, the central portion 4b can also be referred to as a distal end portion.

In the present embodiment, as described above, the central portion 4b of the front wall portion 4 in the D2 direction has a shape bulging forward in the D1 direction. Since the traveling wind is split into the left and right from the central portion 4b, the traveling wind that does not pass through the passing portion 40 is easily received to the rear side of the cover member 3, and the air resistance due to the traveling wind can be further reduced.

In particular, the front wall portion 4 of the present embodiment has an arch shape in which the central portion 4b is curved in a direction protruding forward in the front-and-rear direction of the vehicle 100. Since the front wall portion 4 has a curved shape, it is easier to receive the traveling wind to the rear side as compared with a case where the front wall portion 4 is formed in a flat plate shape. Therefore, the air resistance due to the traveling wind received by the cover portion 3 can be reduced. In addition, since the front wall portion 4 is curved and has a shell shape, rigidity of the front wall portion can be improved, and durability against an impact when the small stone or the like collides with the front wall portion can be improved.

The front wall portion 4 has a bent portion 41 at the left end portion 4a in the D2 direction. The bent portion 41 is formed by being bent such that an end side of a material forming the front wall portion 4 is folded back. The bent portion 41 is formed along a range of the passing portion 40 in the D4 direction (see FIGS. 4A and 4B). As described above, by forming the bent portion 41 at the end portion 4a of the front wall portion 4, the passing portion 40 is provided in the front wall portion 4, so that even when the rigidity of the front wall portion 4a decreases, it is possible to prevent the rigidity of the front wall portion 4a from decreasing.

Regarding the bent portion 41, reference is further made to FIG. 5. A bending direction of the bent portion 41 is a direction from a front surface 4F of the front wall portion 4 toward the exhaust gas sensor 2. As described above, the end portion 4a is bent toward the exhaust gas sensor 2 to form the bent portion 41, so that it is possible to obtain a structure in which the traveling wind hardly enters the bent portion 41 as compared with a case where the end portion 4a is bent toward the front surface 4F. That is, it is possible to reduce noise generated when the traveling wind hits the bent portion 41. In addition, the bent portion 41 can have a structure that hardly receives the air resistance due to the traveling wind. In the present embodiment, the harness 2a is configured to pass through the side of the bent portion 41, and the harness 2a and the bent portion 41 partially overlap when viewed in the D4 direction as illustrated in FIG. 5. As described above, by providing the bent portion 41 at a position where the harness 2a passes through the side of the bent portion 41, it is possible to prevent the exterior of the harness 2a from being damaged by the non-sharp bent portion 41 hitting the harness 2a even when the harness 2a and the front wall portion 4 come into contact with each other.

Next, the annular portion 5 will be described. FIG. 4B is a cross-sectional view taken along line B-B of FIG. 3B. As illustrated in FIG. 4B, the annular portion 5 is formed in an annular shape so as to surround the entire circumference of the exhaust gas sensor 2. As described above, the cover member 3 has the annular portion 5 surrounding the exhaust gas sensor 2, so that the protection of the exhaust gas sensor 2 can be enhanced. Furthermore, when the small stone or the like collides with the front wall portion 4, an impact can be dispersed in the annular portion 5, and the cover member 3 can be prevented from being damaged.

Next, the attachment portion 6 will be described. As illustrated in FIG. 3B, the attachment portion 6 has a form in which flat plate portions of the material of the cover member 3 are overlapped, and an attachment hole 60 penetrating therethrough in a plate thickness direction is formed. The cover member 3 is fixed to the bracket 2c by passing a bolt constituting the fixture 2d through the attachment hole 60 and a hole (not illustrated) of the bracket 2c and fastening the bolt with a nut. The attachment portion 6 has an engagement portion 61 that engages with a recess 2e of the bracket 2c. The engagement portion 61 has a form of a protruding piece and is inserted into a valley of the recess 2e.

In this manner, by attaching the cover member 3 to the boss portion 2b via the bracket 2c, a degree of freedom of the layout can be improved. For example, in a case of a configuration in which the cover member 3 is directly attached to the boss portion 2b, it is necessary to consider a gap for attaching the exhaust gas sensor 2 between the exhaust gas sensor 2 and the cover member 3, and as a result, the annular portion 5 may be increased in size. In such a case, there is a possibility that the air resistance due to the traveling wind increases as the annular portion 5 increases in size. Therefore, by providing the cover member 3 on the boss portion 2b via the bracket 2c, the layout of the cover member 3 can be improved. That is, the cover member 3 can be prevented from unnecessarily increasing in size, and the air resistance due to the traveling wind can be reduced. When the engagement portion 61 engages with the recess 2e, a rotation stop is formed in which the cover member 3 rotates about the fixture 2d, so that positional displacement of the cover member 3 can be prevented to improve protection performance of the exhaust gas sensor 2.

### <Second Embodiment>

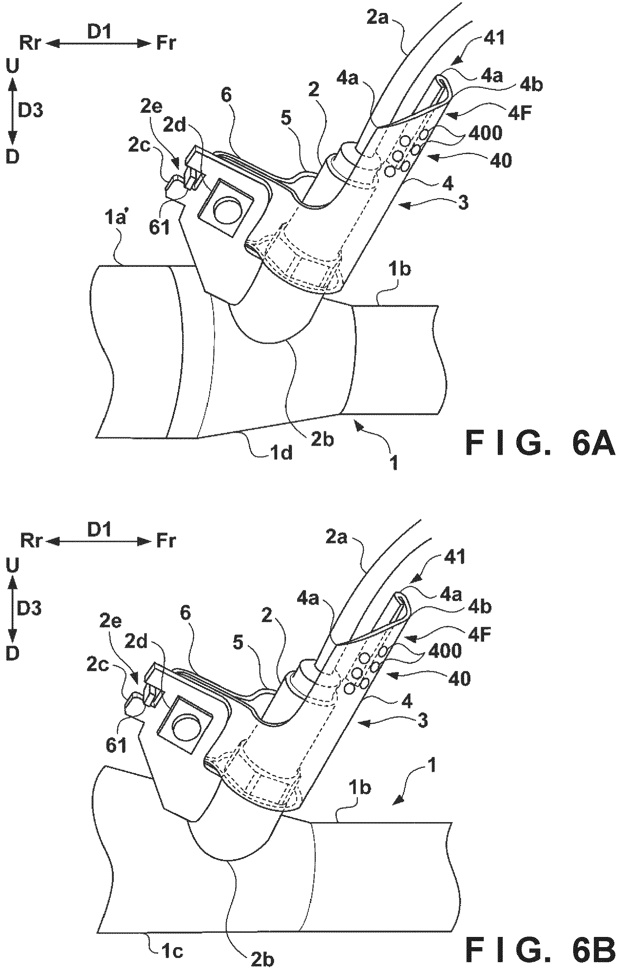

In the first embodiment, an example in which an exhaust gas sensor 2 is provided in a straight portion on the downstream side of a catalyst 1a in an exhaust pipe 1b has been described, but an arrangement location of the exhaust gas sensor 2 is not limited thereto. For example, the arrangement location of the exhaust gas sensor 2 may be changed according to the layout of an exhaust passage 1, the shape and number of the exhaust pipe 1b, and the like. FIGS. 6A and 6B illustrate an example of the arrangement location of the exhaust gas sensor 2.

In the example of FIG. 6A, the exhaust gas sensor 2 is provided in an enlarged diameter portion 1d connected to the upstream side of a catalyst 1a' in the exhaust pipe 1b. Correspondingly, a cover member 3 is also disposed at a position adjacent to the enlarged diameter portion 1d. As compared with the front and rear straight portions and the catalyst 1a', exhaust gas easily diffuses and the pressure loss is low in the enlarged diameter portion 1d. Therefore, by providing the exhaust gas sensor 2 in the enlarged diameter portion 1d, it is possible to prevent a detection portion at a distal end of the exhaust gas sensor 2 from becoming the resistance of the exhaust gas flow inside the exhaust pipe 1b. In the example of FIG. 6A, the exhaust gas sensor 2 is provided in the enlarged diameter portion 1d on the upstream side of the catalyst 1a'. However, when the enlarged diameter portion is also provided on the downstream side of the catalyst 1a', the exhaust gas sensor 2 may be provided in the enlarged diameter portion on the downstream side.

In the example of FIG. 6B, the exhaust gas sensor 2 is disposed at a part on the upstream side of a silencer 1c. Correspondingly, the cover member 3 is also disposed at a position adjacent to the enlarged diameter portion 1d.

### <Third Embodiment>

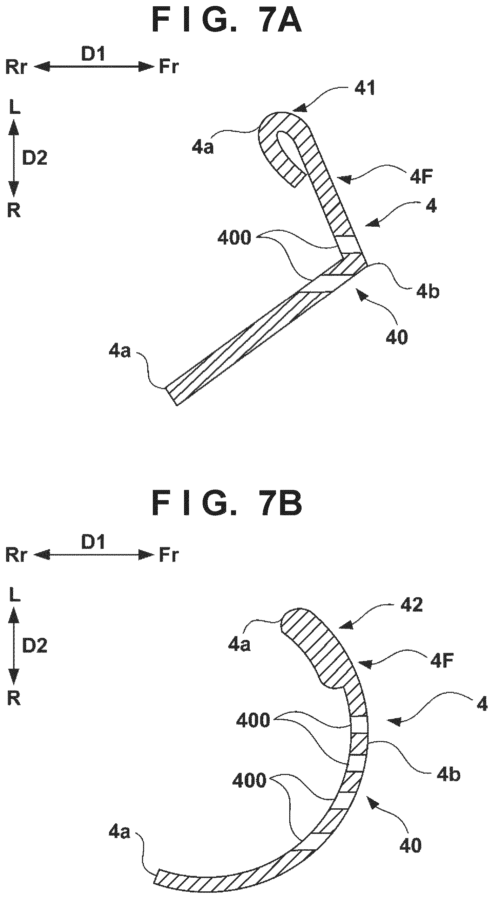

In the first embodiment, an example in which a front wall portion 4 has a curved shape has been described. The shape of the front wall portion 4 is not limited thereto, and can be appropriately designed. For example, the front wall portion 4 may have a shape bent in an L shape. FIG. 7A is a schematic view (cross-sectional view of the front wall portion 4) illustrating an example thereof. The front wall portion 4 is bent at a central portion (top portion) 4b and is formed in an L shape or a mountain shape. In this manner, even in the shape in which the front wall portion 4 is bent, a traveling wind can be easily received to the rear side, and air resistance due to the traveling wind can be reduced.

### <Fourth Embodiment>

In the first embodiment, an example has been described in which an end portion 4a of a front wall portion 4 has a bent portion 41 bent and formed, but a method of increasing the rigidity is not limited thereto. In an example of FIG. 7B, a high rigidity portion 42 is formed at the end portion 4a of the front wall portion 4. The high rigidity portion 42 is a portion in which the rigidity is improved by making a thickness thicker than a central portion 4b of the front wall portion 4.

In the present embodiment, the high rigidity portion 42 is provided at the end portion 4a of the front wall portion 4, but the high rigidity portion 42 may be provided, for example, at the central portion 4b or may be provided along a portion forming a passing portion 40. As described above, by providing the high rigidity portion 42, a degree of freedom in design such as the size, shape, and arrangement of a through hole 400 forming the passing portion 40 can be increased.

### <Fifth Embodiment>

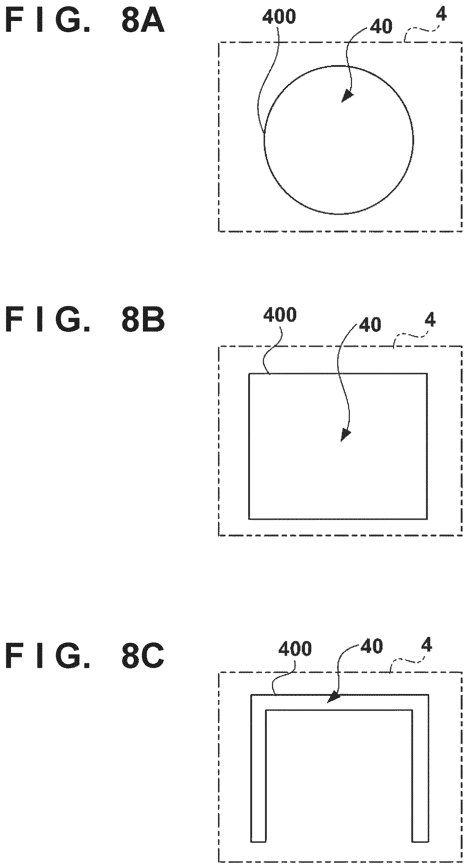

In the first embodiment, an example has been described in which the passing portion 40 of the front wall portion 4 includes a plurality of through holes 400 formed in a mesh shape. The passing portion 40 is not limited thereto, and may be configured in the following shape. FIGS. 8A to 8E are diagrams illustrating another configuration example of the passing portion 40.

The example of FIG. 8A illustrates an example in which the passing portion 40 is configured by a single through hole 400. Even a single through hole 400 contributes to reduction of air resistance.

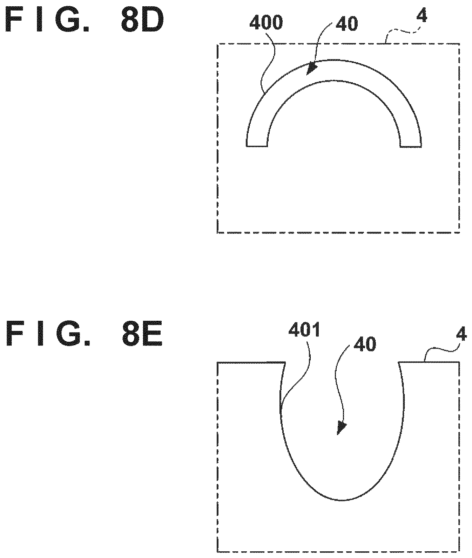

The shape of the through hole 400 is not limited to a circular shape. For example, the shape may be a quadrangle as in the example of FIG. 8B. In addition, as in the example of FIG. 8C, it may be a C shape or a portal shape. In addition, as illustrated in FIG. 8D, it may be an arc shape.

The passing portion 40 may not be a hole whose periphery is closed. FIG. 8E illustrates an example in which the passing portion 40 is formed by a notch 401. The notch 401 has a shape opened to an end portion of the front wall portion 4, and even such a shape contributes to reduction of air resistance.

### <Sixth Embodiment>

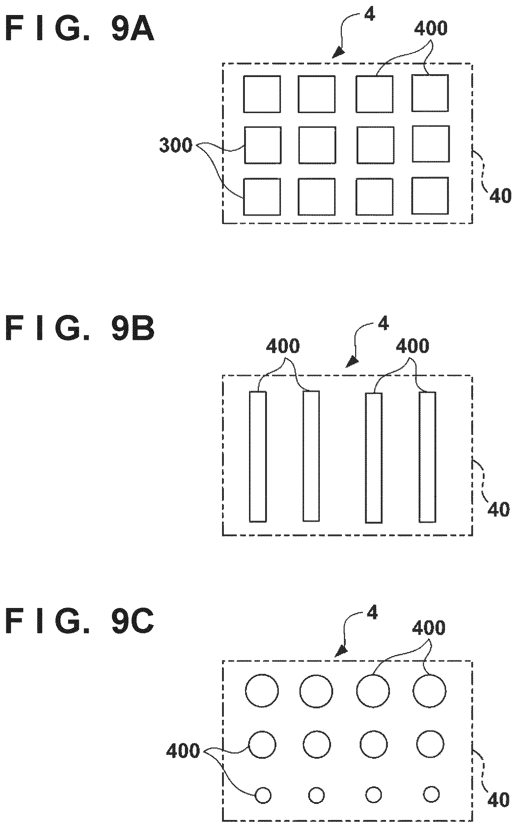

In the first embodiment, an example in which a passing portion 40 is formed in a mesh shape by a plurality of circular through holes 400 has been described, but the present invention is not limited thereto. FIG. 9A illustrates an example in which rectangular through holes 400 are arranged in a mesh shape. FIG. 9B illustrates an example in which the slit-shaped through holes 400 are arranged in a lateral direction. FIG. 9C illustrates an example in which a plurality of through holes 400 having different sizes are arranged in a mesh shape. Such a configuration example also contributes to reduction of air resistance.

### <Summary of Embodiments>

The above embodiments disclose at least the following straddle type vehicle and cover member.
1. The straddle type vehicle (100) of the above embodiment comprising
   an exhaust passage (1) through which exhaust gas of an internal combustion engine (106) flows,
   an exhaust gas sensor (2) detecting a component of the exhaust gas flowing through the exhaust passage (1), and
   a cover member (3) covering the exhaust gas sensor (2), wherein
   the cover member (3) has a front wall portion (4) that is disposed on a front side of the exhaust gas sensor (2) in a front-and-rear direction of the straddle type vehicle (100), and
   a passing portion (40) through which a traveling wind passes is formed in the front wall portion (4).
   According to this embodiment, when the straddle type vehicle travels, the cover member can prevent a small stone or the like from colliding with the exhaust gas sensor. Further, since the passing portion is formed, air resistance due to a traveling wind can be reduced. Therefore, the exhaust gas sensor can be protected from a flying stone or the like during traveling while suppressing the air resistance due to the traveling wind.
2. The straddle type vehicle (100) of the above embodiment, wherein
   the passing portion (40) has at least one through hole (400) penetrating the front wall portion (4).
   According to this embodiment, the passing portion can be formed with a relatively simple structure. Further, according to the size design of the through hole, the cover member can achieve both performance of preventing a small stone or the like from colliding with the exhaust gas sensor and performance of reducing the resistance due to the traveling wind.
3. The straddle type vehicle (100) of the above embodiment, wherein
   the front wall portion (4) has a top portion (4b) that is located between both end portions (4a) of the front wall portion (4) in a vehicle width direction and located forward of both the end portions (4a) in the front-and-rear direction.
   According to this embodiment, since the top portion is provided in front of both the end portions of the front wall portion, the traveling wind that does not pass through the passing portion is easily received to the rear side of the front wall portion, and the air resistance due to the traveling wind can be reduced.
4. The straddle type vehicle (100) of the above embodiment, wherein
   the front wall portion (4) has a shape curved in a direction protruding forward in the front-and-rear direction.
   According to this embodiment, since the front wall portion has a curved shape, it is easy to receive the traveling wind to the rear side of the front wall portion, and the air resistance due to the traveling wind can be reduced. Further, the rigidity of the front wall portion is improved as compared with a flat plate-shaped configuration, and the durability against an impact when a small stone or the like collides with the front wall portion can be enhanced.
5. The straddle type vehicle (100) of the above embodiment, wherein
   the cover member (3) has an annular portion (5) surrounding entire circumference of the exhaust gas sensor (2).
   According to this embodiment, the cover member improves the protection performance of the exhaust gas sensor and disperses an impact received when a small stone or the like collides with the cover member, so that it is possible to prevent the cover member from being damaged.
6. The straddle type vehicle (100) of the above embodiment, wherein
   the passing portion (40) is formed in a mesh shape by a plurality of through holes (400) penetrating the front wall portion (4).
   According to this embodiment, since the passing portion is configured by the plurality of through holes, the air resistance can be distributed to each through hole, and the size of each through hole can be designed to be small. That is, it is possible to enhance the performance of blocking small stones or the like that would enter the passing portion.
7. The straddle type vehicle (100) of the above embodiment, wherein
   the front wall portion (4) has a high rigidity portion (42) having higher rigidity than a central portion (4b) in a vehicle width direction at an end portion (4a) of the front wall portion (4) in the vehicle width direction.
   According to this embodiment, even if the rigidity of the front wall portion is partially reduced due to the formation of the passing portion, the durability of the front wall portion against the impact at the time of collision of a small stone or the like can be enhanced.
8. The straddle type vehicle (100) of the above embodiment, wherein
   the front wall portion (4) has a bent portion (41) at an end portion (4a) of the front wall portion (4) in a vehicle width direction.
   According to this embodiment, even if the rigidity of the front wall portion is partially reduced due to the formation of the passing portion, the durability of the front wall portion against the impact at the time of collision of a small stone or the like can be enhanced.
9. The straddle type vehicle (100) of the above embodiment, wherein
   a harness (2a) connected to the exhaust gas sensor (2) passes through a side of the bent portion (41) of the front wall portion (4).
   According to this embodiment, the end portion of the front wall portion is bent. Therefore, even when the harness and the front wall portion come into contact with each other, the bent portion that is not sharp comes into contact with the harness, so that it is possible to prevent the harness from being damaged.
10. The straddle type vehicle (100) of the above embodiment, wherein
   a bending direction of the bent portion (41) is a direction toward the exhaust gas sensor (2).
   According to this embodiment, the bent portion is bent toward the exhaust gas sensor to reduce noise generated when the traveling wind hits the bent portion. When the bent portion is bent toward the exhaust gas sensor, the air resistance due to the traveling wind is less likely to be received than when the bent portion is bent toward the opposite side.
11. The straddle type vehicle (100) of the above embodiment, comprising:
   a boss portion (2b) that is provided in the exhaust passage (1) and to which the exhaust gas sensor (2) is attached; and
   a bracket (2c) that is provided in the boss portion (2b) and holds the cover member (3).
   According to this embodiment, since the cover member is attached with the bracket interposed therebetween, the layout of the cover member can be improved, and an unnecessary increase in size of the cover member can be prevented.
12. The cover member (3) of the above embodiment that is attached to a straddle type vehicle (100) including an exhaust passage (1) through which exhaust gas of an internal combustion engine (106) flows and an exhaust gas sensor (2) detecting a component of the exhaust gas flowing through the exhaust passage (1), and covers the exhaust gas sensor (2), the cover member (3) comprising
   a front wall portion (4) disposed on a front side of the exhaust gas sensor (2) in a front-and-rear direction of the straddle type vehicle (100), wherein
   a passing portion (40) through which a traveling wind passes is formed in the front wall portion (4).

According to this embodiment, when the straddle type vehicle travels, the cover member can prevent a small stone or the like from colliding with the exhaust gas sensor. Further, since the passing portion is formed, air resistance due to a traveling wind can be reduced. Therefore, the exhaust gas sensor can be protected from a flying stone or the like during traveling while suppressing the air resistance due to the traveling wind.

Heretofore, embodiments of the invention have been described. The invention is not limited to the foregoing embodiments, and various variations/changes are possible within the spirit of the invention.

## Claims

1. A straddle type vehicle (100) comprising
an exhaust passage (1) through which exhaust gas of an internal combustion engine (106) flows,
an exhaust gas sensor (2) detecting a component of the exhaust gas flowing through the exhaust passage (1), and
a cover member (3) covering the exhaust gas sensor (2), wherein
the cover member (3) has a front wall portion (4) that is disposed on a front side of the exhaust gas sensor (2) in a front-and-rear direction of the straddle type vehicle (100), and
a passing portion (40) through which a traveling wind passes is formed in the front wall portion (4).

2. The straddle type vehicle (100) according to claim 1, wherein
the passing portion (40) has at least one through hole (400) penetrating the front wall portion (4).

3. The straddle type vehicle (100) according to claim 1, wherein
the front wall portion (4) has a top portion (4b) that is located between both end portions (4a) of the front wall portion (4) in a vehicle width direction and located forward of both the end portions (4a) in the front-and-rear direction.

4. The straddle type vehicle (100) according to claim 1, wherein
the front wall portion (4) has a shape curved in a direction protruding forward in the front-and-rear direction.

5. The straddle type vehicle (100) according to claim 1, wherein
the cover member (3) has an annular portion (5) surrounding entire circumference of the exhaust gas sensor (2).

6. The straddle type vehicle according to claim 1, wherein
the passing portion (40) is formed in a mesh shape by a plurality of through holes (400) penetrating the front wall portion (4).

7. The straddle type vehicle (100) according to claim 1, wherein
the front wall portion (4) has a high rigidity portion (42) having higher rigidity than a central portion (4b) in a vehicle width direction at an end portion (4a) of the front wall portion (4) in the vehicle width direction.

8. The straddle type vehicle (100) according to claim 1, wherein
the front wall portion (4) has a bent portion (41) at an end portion (4a) of the front wall portion (4) in a vehicle width direction.

9. The straddle type vehicle (100) according to claim 8, wherein
a harness (2a) connected to the exhaust gas sensor (2) passes through a side of the bent portion (41) of the front wall portion (4).

10. The straddle type vehicle (100) according to claim 9, wherein
a bending direction of the bent portion (41) is a direction toward the exhaust gas sensor (2).

11. The straddle type vehicle (100) according to claim 5, comprising:
a boss portion (2b) that is provided in the exhaust passage (1) and to which the exhaust gas sensor (2) is attached; and
a bracket (2c) that is provided in the boss portion (2b) and holds the cover member (3).

12. A cover member (3) that is attached to a straddle type vehicle (100) including an exhaust passage (1) through which exhaust gas of an internal combustion engine (106) flows and an exhaust gas sensor (2) detecting a component of the exhaust gas flowing through the exhaust passage (1), and covers the exhaust gas sensor (2), the cover member (3) comprising
a front wall portion (4) disposed on a front side of the exhaust gas sensor (2) in a front-and-rear direction of the straddle type vehicle (100), wherein
a passing portion (40) through which a traveling wind passes is formed in the front wall portion (4).
